# EUROPEAN PATENT APPLICATION

(11) **EP 4 844 868 A1**
(43) Date of publication of application: **25.11.2026**
(21) Application number: 26171962.9
(22) Date of filing: 13.04.2026
(51) Int. Cl.: H01M 10/0562, H01M 4/505, H01M 4/525, H01M 10/54, H01M 10/0525

(54) **METHOD FOR RECYCLING SULFIDE SOLID ELECTROLYTE**

(30) Priority: 21.05.2025 JP 2025084573
(71) Applicant: Toyota Jidosha Kabushiki Kaisha, Toyota-shi, Aichi-ken 471-8571 (JP)
(72) Inventor: SHIBAKAWA, Kaito, KARIYA-CITY, 448-0002 (JP); VISBALMENDOZA, Heidyhodex, Toyota-shi, 471-8571 (JP); TANAKA, Takumi, Toyota-shi, 471-8571 (JP)
(74) Representative: D Young & Co LLP

(57) **Abstract**

The present disclosure relates to a method for recycling a sulfide solid electrolyte. The method for recycling the sulfide solid electrolyte includes immersing the sulfide solid electrolyte in a liquid and recovering an S element from the sulfide solid electrolyte into the liquid. The concentration of a Ni element contained in the liquid is 0.46% by mass or more.

## Description

### BACKGROUND OF THE INVENTION

### 1. Field of the Invention

The present disclosure relates to a method for recycling a sulfide solid electrolyte.

### 2. Description of Related Art

Various techniques related to sulfide solid electrolytes, such as those disclosed in Japanese Unexamined Patent Application Publication No. 2016-58299 (JP 2016-58299 A), have been proposed.

### SUMMARY OF THE INVENTION

Japanese Unexamined Patent Application Publication No. 2016-58299 (JP 2016-58299 A) discloses a method for recovering a sulfide solid electrolyte from an electrode of an all-solid-state battery. Such a technique has room for improvement in terms of increasing the recovery rate of an S element from a sulfide solid electrolyte and preventing generation of hydrogen sulfide.

The present disclosure provides a method for recycling a sulfide solid electrolyte by which an S element can be efficiently recovered from a sulfide solid electrolyte.

Specifically, the present disclosure includes the following aspects.

### Aspect 1

Aspect 1 of the present disclosure relates to a method for recycling a sulfide solid electrolyte, the method including: immersing the sulfide solid electrolyte in a liquid; and recovering an S element from the sulfide solid electrolyte into the liquid, wherein a concentration of a Ni element contained in the liquid is 0.46% by mass or more.

### Aspect 2

In the method according to aspect 1, a Ni-containing electrode active material may be immersed in the liquid in the immersing.

### Aspect 3

In the method according to aspect 1 or 2, the sulfide solid electrolyte may have an argyrodite-type crystal phase.

### Aspect 4

In the method according to aspect 1 or 2, the sulfide solid electrolyte may be a glass-ceramic sulfide solid electrolyte.

### Aspect 5

In the method according to any one of aspects 1 to 4, the concentration of the Ni element contained in the liquid may be 0.46% by mass or more and 10% by mass or less.

### Aspect 6

In the method according to aspect 2, the Ni-containing electrode active material may be a lithium-transition metal composite oxide represented by a general formula LixNiaCobMcOy, wherein M is Mn or Al, 0.1 ≤ x ≤ 1.5, 0.3 ≤ a ≤ 1.0, 0 ≤ b ≤ 0.4, 0 ≤ c ≤ 0.4, a + b + c = 1.0, and 1.5 ≤ y ≤ 2.1.

### Aspect 7

The method according to aspect 2 may further include, before the immersing, disassembling a battery including the sulfide solid electrolyte and the Ni-containing electrode active material to prepare the sulfide solid electrolyte and the Ni-containing electrode active material.

### Aspect 8

The method according to aspect 2 may further include, after the immersing, stirring the liquid.

The present disclosure makes it possible to provide a method for recycling a sulfide solid electrolyte by which an S element can be efficiently recovered from a sulfide solid electrolyte.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart showing an example of a method for recycling a sulfide solid electrode of the present disclosure; and
FIG. 2 is a graph showing a relationship between the concentration of a Ni element contained in water used in each of Examples 1 to 6 and Comparative Examples 1 and 2 and the recovered amount of an S element contained in collected filtrate of each of Examples 1 to 4 determined as a relative value against Comparative Example 1 or that of each of Examples 5 and 6 determined as a relative value against Comparative Example 2.

### DETAILED DESCRIPTION OF EMBODIMENTS

Hereinbelow, embodiments according to the present disclosure will be described. It should be noted that matters that are required to implement the present disclosure (for example, common configurations and production processes of sulfide solid electrolytes not characterizing the present disclosure) other than matters specifically described herein may be understood as design matters for those skilled in the art based on the related art in the relevant field. The present disclosure can be implemented based on contents disclosed herein and common technical knowledge in the relevant field.

The present disclosure provides a method for recycling a sulfide solid electrolyte, the method including: an immersion step in which the sulfide solid electrolyte is immersed in a liquid; and a recovery step in which an S element is recovered from the sulfide solid electrolyte into the liquid, wherein a concentration of a Ni element contained in the liquid is 0.46% by mass or more.

Generation of hydrogen sulfide from the sulfide solid electrolyte can be prevented by adding an alkaline aqueous solution or the like to the sulfide solid electrolyte to maintain the inside of a system alkaline.

The present disclosure makes it possible to reduce the amount of hydrogen sulfide generated when the sulfide solid electrolyte is dissolved in the liquid not by adding sodium hydroxide used to maintain the inside of a system alkaline but according to the concentration of an active material component contained in an electrode. By reducing a hydrogen sulfide generation amount, it is possible to increase the recovery rate of an S element from the sulfide solid electrolyte.

The method for recycling a sulfide solid electrolyte of the present disclosure includes an immersion step 1 and a recovery step 2, and if necessary, further includes a preparation step A before the immersion step 1.

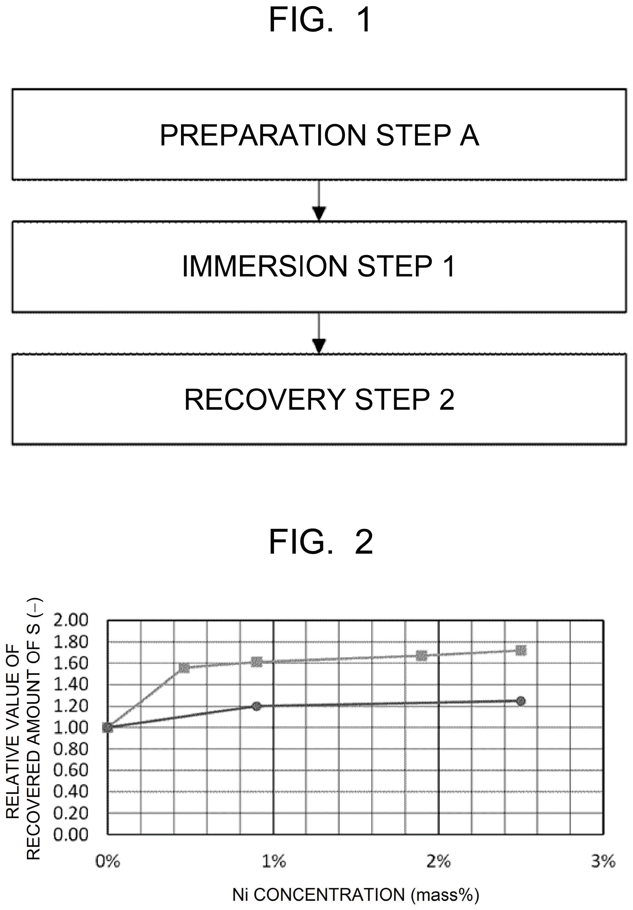

FIG. 1 is a flowchart showing an example of the method for recycling a sulfide solid electrolyte of the present disclosure.

As shown in FIG. 1, in the method for recycling a sulfide solid electrolyte of the present disclosure, the preparation step A, the immersion step 1, and the recovery step 2 may be performed in this order.

### Immersion Step 1

The immersion step 1 is a step in which the sulfide solid electrolyte is immersed in a liquid.

The sulfide solid electrolyte is an electrolyte containing an S element. The sulfide solid electrolyte usually contains at least an Li element and an S element. The sulfide solid electrolyte may further contain an M element (M is at least one selected from among P, As, Sb, Si, Ge, Sn, B, Al, Ga, and In). The sulfide solid electrolyte may contain a halogen element such as F, Cl, Br, or I.

The sulfide solid electrolyte may be a glass-based (amorphous) sulfide solid electrolyte, a glass-ceramic-based sulfide solid electrolyte, or a crystalline sulfide solid electrolyte.

The sulfide solid electrolyte may have a crystal phase. Examples of the crystal phase include a Thio-LISICON-type crystal phase, an argyrodite-type crystal phase, and an LGPS-type crystal phase.

The composition of the sulfide solid electrolyte is not limited, and examples thereof include xLi₂S·(1-x)P₂S₅ (0.5 ≤ x < 1) and yLiI·zLiBr·(100-y-z) (xLi₂S·(1-x)P₂S₅) (0.5 ≤ x < 1, 0 ≤ y ≤ 30, 0 ≤ z ≤ 30). In these compositions, x may satisfy 0.7 ≤ x ≤ 0.8. Another example of the composition of the sulfide solid electrolyte is Li₇₋ₓPS₆₋ₓXₓ. X is at least one selected from the group consisting of F, Cl, Br, and I, and x satisfies 0 ≤ x < 2. Yet another example of the composition of the sulfide solid electrolyte is Li₄₋ₓMe₁₋ₓPₓS₄ (0 < x < 1). Me is at least one selected from among Al, Zn, In, Ge, Si, Sn, Sb, Ga, and Bi. Examples of the sulfide solid electrolyte include LiI-LiBr-Li₂S-P₂S₅, LiI-Li₂S-P₂S₅, LiI-Li₂S-P₂O₅, and LiI-Li₃PO₄-P₂S₅.

The liquid is not limited as long as it can dissolve the sulfide solid electrolyte, and may be, for example, water.

The concentration of a Ni element contained in the liquid is not limited as long as it is 0.46% by mass or more, and the upper limit thereof may be 10% by mass or less or 2.5% by mass or less. When the concentration of a Ni element contained in the liquid is 0.46% by mass or more and the liquid is water, the pH of the water can be shifted from neutral to desired alkalinity.

In the immersion step 1, a Ni-containing electrode active material may be immersed in the liquid as a Ni source.

The Ni-containing electrode active material may be Li(Ni_{0.5}Mn_{1.5})O₄, LiNiPO₄, or a lithium-transition metal composite oxide or the like represented by a general formula of LixNiaCobMcOy (M is Mn or Al, 0.1 ≤ x ≤ 1.5, 0.3 ≤ a ≤ 1.0, 0 ≤ b ≤ 0.4, 0 ≤ c ≤ 0.4, a + b + c = 1.0, 1.5 ≤ y ≤ 2.1).

In the general formula, an Li compositional ratio "x" is not limited as long as it satisfies a relationship of "0.1 ≤ x ≤ 1.5". The Li compositional ratio "x" may be, for example, 0.4 or more, 0.6 or more, 0.8 or more, 1.0 or more, or 1.1 or more. The Li compositional ratio "x" may be, for example, 1.4 or less or 1.2 or less.

In the above general formula, an O compositional ratio "y" is not limited as long as it satisfies a relationship of "1.5 ≤ y ≤ 2.1". The O compositional ratio "y" may be, for example, 1.6 or more, 1.7 or more, 1.8 or more, or 1.9 or more. The O compositional ratio "y" may be, for example, 2.0 or less. In the above general formula, a Ni compositional ratio "a", a Co compositional ratio "b", and an Mn compositional ratio "c" satisfy a relationship of "a + b + c = 1.0".

In the above general formula, the Ni compositional ratio "a" is not limited as long as it satisfies a relationship of "0.3 ≤ a ≤ 1.0". The Ni compositional ratio "a" may be, for example, 1/3 or more, 0.6 or more, 0.7 or more, 0.8 or more, or 0.85 or more. The Ni compositional ratio "a" may be, for example, 0.9 or less.

In the above general formula, the Co compositional ratio "b" is not limited as long as it satisfies a relationship of "0 ≤ b ≤ 0.4". The Co compositional ratio "b" may be, for example, 0.01 or more, 0.02 or more, 0.03 or more, 0.04 or more, 0.05 or more, 0.06 or more, 0.07 or more, or 0.075 or more. The Co compositional ratio "b" may be, for example, 1/3 or less, 0.25 or less, 0.20 or less, 0.15 or less, 0.10 or less, 0.09 or less, or 0.08 or less.

In the above general formula, the M compositional ratio "c" is not limited as long as it satisfies a relationship of "0 ≤ c ≤ 0.4". The M compositional ratio "c" may be, for example, 0.01 or more, 0.02 or more, 0.03 or more, 0.04 or more, 0.05 or more, 0.06 or more, 0.07 or more, or 0.075 or more. The M compositional ratio "c" may be, for example, 1/3 or less, 0.25 or less, 0.20 or less, 0.15 or less, 0.10 or less, 0.09 or less, or 0.08 or less.

A dopant may be optionally added to the lithium-transition metal composite oxide. The dopant refers to an element other than Li, Ni, Co, Mn, and O. The dopant may include, for example, at least one selected from the group consisting of La, W, Zr, Mo, Mg, Ca, Na, Fe, Cr, Zn, Si, Sn, and Ag. The compositional ratio d of the dopant may be, for example, 0.005 or more, 0.01 or more, 0.02 or more, 0.03 or more, or 0.04 or more relative to a + b + c = 1. The compositional radio d of the dopant may be, for example, 0.05 or less relative to a + b + c = 1.

In the immersion step 1, the order of immersing the sulfide solid electrolyte and the Ni-containing electrode active material in the liquid is not limited. The sulfide solid electrolyte may be immersed in the liquid first, the Ni-containing electrode active material may be immersed in the liquid first, or a mixture containing the sulfide solid electrolyte and the Ni-containing electrode active material may be immersed in the liquid to immerse the sulfide solid electrolyte and the Ni-containing electrode active material at the same time.

After the sulfide solid electrolyte and the Ni-containing electrode active material are immersed in the liquid, the liquid may be stirred. A stirring method is not limited, and the liquid may be stirred with a stirrer.

A stirring time is not limited and may be, for example, 1 minute or more and 1 hour or less.

### Recovery Step 2

The recovery step 2 is a step in which an S element is recovered from the sulfide solid electrolyte into the liquid.

A recovery method is not limited, and an S element can be recovered as a liquid containing an S element by subjecting the liquid, in which the sulfide solid electrolyte etc. are immersed, to filtration to separate it into solid matter and filtrate and by collecting the filtrate.

### Preparation Step A

The preparation step A is a step in which a battery including the sulfide solid electrolyte and the Ni-containing electrode active material is disassembled before the immersion step 1 to prepare the sulfide solid electrolyte and the Ni-containing electrode active material.

A method for disassembling the battery is not limited.

The battery used in the present disclosure is a battery including a sulfide solid electrolyte and a Ni-containing electrode active material.

The battery usually includes a positive electrode layer, an electrolyte layer, and a negative electrode layer.

The Ni-containing electrode active material can be included in at least one of the positive electrode layer and the negative electrode layer and may be included in the positive electrode layer.

The sulfide solid electrolyte can be included in at least one selected from the group consisting of the positive electrode layer, the electrolyte layer, and the negative electrode layer.

When including a sulfide solid electrolyte and a Ni-containing electrode active material, the positive electrode layer may be taken out of the battery to prepare the sulfide solid electrolyte and the Ni-containing electrode active material.

When the positive electrode layer includes a Ni-containing electrode active material and the negative electrode layer does not include a Ni-containing electrode active material, the Ni-containing electrode active material may be prepared by taking at least the positive electrode layer out of the battery, and when the electrolyte layer and the negative electrode layer as well as the positive electrode layer include a sulfide solid electrolyte, the electrolyte layer and the negative electrode layer may also be taken out of the battery and subjected to the recycling method of the present disclosure.

When the positive electrode layer and the negative electrode layer include at least one of an electrically-conductive material and a binder, conventionally-known methods can be appropriately used to remove them.

### Positive Electrode Layer

The positive electrode layer includes at least a positive electrode active material and, if necessary, may include at least one of an electrolyte, an electrically-conductive material, and a binder.

The positive electrode active material is not limited and may be, for example, the above-described Ni-containing electrode active material.

The electrolyte may be the above-described sulfide solid electrolyte.

The electrically-conductive material may be, for example, a carbon-based electrically-conductive material, a metallic particle, or an electrically-conductive polymer. Examples of the carbon-based electrically-conductive material include particulate materials such as acetylene black (AB) and ketjen black (KB) and fibrous materials such as a vapor grown carbon fiber (VGCF), a carbon nanotube (CNT), and a carbon nanofiber (CNF).

Examples of the binder include styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), styrene-isoprene-styrene block copolymer (SIS), and ethylene-propylene-diene copolymer (EPDM).

### Electrolyte Layer

The electrolyte layer is a layer formed between the positive electrode layer and the negative electrode layer and includes at least an electrolyte.

The electrolyte layer may be a solid electrolyte layer formed of a solid.

The electrolyte may be the above-described sulfide solid electrolyte.

### Negative Electrode Layer

The negative electrode layer includes at least a negative electrode active material and, if necessary, may include at least one of an electrolyte, an electrically-conductive material, and a binder.

The negative electrode active material may contain, for example, at least one selected from the group consisting of the above-described Ni-containing electrode active material, a carbon-based active material, an Li-based active material, an Si-based active material, and lithium titanate.

The carbon-based active material may contain, for example, at least one selected from the group consisting of graphite, soft carbon, and hard carbon. The "graphite" is a general term for natural graphite and artificial graphite. The graphite may be a mixture of natural graphite and artificial graphite.

Examples of the Li-based active material include Li, Li silicate, and an Li alloy.

Examples of the Si-based active material include Si, SiO, and an Si alloy.

The electrolyte, the electrically-conductive material, and the binder used for the negative electrode layer may be the same as those described above with reference to the positive electrode layer.

### Battery

The battery used in the present disclosure may be a lithium-ion battery. The battery used in the present disclosure may be a solid-state battery having an electrolyte layer including a solid electrolyte. The solid-state battery may be either a semi-solid-state battery or an all-solid-state battery. In the present disclosure, the semi-solid-state battery is a battery having an electrolyte layer including a solid component such as a solid electrolyte and a liquid component (e.g., a solvent and an electrolytic solution). In the present disclosure, the all-solid-state battery is a battery having an electrolyte layer including only a solid component such as a solid electrolyte.

The S element recovered by the recycling method of the present disclosure can be used as a material of a battery.

The battery may be used as, for example, a power source for vehicles such as a hybrid electric vehicle (HEV), a plug-in hybrid electric vehicle (PHEV), a battery electric vehicle (BEV), a petrol-driven vehicle, and a diesel engine vehicle. Particularly, the battery may be used as a driving power source for a hybrid electric vehicle (HEV), a plug-in hybrid electric vehicle (PHEV), or a battery electric vehicle (BEV). Alternatively, the battery may be used as a power source for transportations other than vehicles (e.g., railways, ships, airplanes) or a power source for electrical products such as information-processing devices.

It should be noted that the present disclosure is not limited to the above embodiments. The above embodiments are merely examples, and anything that has substantially the same configuration as the technical idea described in the scope of the claims of the present disclosure and exhibits similar functions and effects is encompassed in the technical scope of the present disclosure.

### Example 1

A glass-ceramic-based sulfide solid electrolyte was prepared as a sulfide solid electrolyte, and LiNi_{1/3}Co_{1/3}Mn_{1/3}O₂ (NCM111) was prepared as a Ni-containing electrode active material.

Twenty milliliters of water was placed in a beaker, and 0.1 g of the glass-ceramic-based sulfide solid electrolyte and 0.32 g of LiNi_{1/3}Co_{1/3}Mn_{1/3}O₂ were immersed in the water. The concentration of a Ni element contained in the water was 0.46% by mass.

Then, the content of the beaker was stirred with a stirrer for 1 hour to obtain a mixture.

Then, the mixture was filtered to be separated into solid matter and filtrate and the filtrate was collected.

### Example 2

Filtrate was collected in the same manner as in Example 1 except that 0.64 g of LiNi_{1/3}Co_{1/3}Mn_{1/3}O₂ was immersed in water as a Ni-containing electrode active material such that the concentration of a Ni element contained in the water was 0.90% by mass.

### Example 3

Filtrate was collected in the same manner as in Example 1 except that 0.64 g of LiNi_{0.6}Co_{0.2}Mn_{0.2}O₂ (NCM622) was immersed in water as a Ni-containing electrode active material such that the concentration of a Ni element contained in the water was 1.90% by mass.

### Example 4

Filtrate was collected in the same manner as in Example 1 except that 0.64 g of LiNi_{0.8}Co_{0.1}Al_{0.1}O₂ (NCA) was immersed in water as a Ni-containing electrode active material such that the concentration of a Ni element contained in the water was 2.50% by mass.

### Comparative Example 1

A glass-ceramic-based sulfide solid electrolyte was prepared as a sulfide solid electrolyte. Twenty milliliters of water was placed in a beaker, and 0.1 g of the glass-ceramic-based sulfide solid electrolyte was immersed in the water. The concentration of a Ni element contained in the water was 0% by mass.

Then, the content of the beaker was stirred with a stirrer for 1 hour to obtain a mixture.

Then, the mixture was filtered to be separated into solid matter and filtrate and the filtrate was collected.

### Example 5

Filtrate was collected in the same manner as in Example 2 except that a sulfide solid electrolyte having an argyrodite-type crystal phase was prepared as a sulfide solid electrolyte.

### Example 6

Filtrate was collected in the same manner as in Example 4 except that a sulfide solid electrolyte having an argyrodite-type crystal phase was prepared as a sulfide solid electrolyte.

### Comparative Example 2

Filtrate was collected in the same manner as in Comparative Example 1 except that a sulfide solid electrolyte having an argyrodite-type crystal phase was prepared as a sulfide solid electrolyte.

### ICP Element Analysis

Each of the filtrates collected in Examples 1 to 6 and Comparative Examples 1 and 2 was subjected to ICP element analysis.

The filtrate was diluted 10-fold, and Ultrapur (R) nitric acid was added thereto to achieve a concentration of 1% by mass to prepare a test sample. The test sample was subjected to element analysis using an ICP-MS apparatus (7700 series manufactured by Agilent Technologies) and an ICP emission spectrophotometer (PS3520UVDDII manufactured by Hitachi High-Tech Science Corporation).

From the result of the element analysis, the amount of an S element contained in the filtrate was calculated as an amount of an S element recovered from the sulfide solid electrolyte. The results of Examples 1 to 4 and Comparative Example 1 are shown in Table 1 and the results of Examples 5 and 6 and Comparative Example 2 are shown in Table 2.

The recovered amount of S shown in Table 1 is a relative value against Comparative Example 1 when the recovered amount of S of Comparative Example 1 is regarded as a reference value (set to 1).

The recovered amount of S shown in Table 2 is a relative value against Comparative Example 2 when the recovered amount of S of Comparative Example 2 is regarded as a reference value (set to 1).

**Table 1**

| | Sulfide solid electrolyte | NCM111 | NCM622 | NCA | Ni concentration | pH | Recovered amount of S |
|---|---|---|---|---|---|---|---|
| | Type | g | g | g | mass% | | Relative value against |
| | | | | | | | Comparative Example 1 |
| Comparative Example 1 | Glass-ceramic | - | - | - | 0 | 7.7 | 1 |
| Example 1 | Glass-ceramic | 0.32 | - | - | 0.46 | 8.2 | 1.56 |
| Example 2 | Glass-ceramic | 0.64 | - | - | 0.90 | 8.3 | 1.61 |
| Example 3 | Glass-ceramic | - | 0.64 | - | 1.90 | 11.2 | 1.67 |
| Example 4 | Glass-ceramic | - | - | 0.64 | 2.50 | 11.3 | 1.72 |

**Table 2**

| | Sulfide solid electrolyte | NCM111 | NCM622 | NCA | Ni concentration | pH | Recovered amount of S |
|---|---|---|---|---|---|---|---|
| | Type | g | g | g | mass% | | Relative value against |
| | | | | | | | Comparative Example 2 |
| Comparative Example 2 | Argyrodite type | - | - | - | 0 | 7.7 | 1 |
| Example 5 | Argyrodite type | 0.64 | - | - | 0.90 | 8.3 | 1.20 |
| Example 6 | Argyrodite type | - | - | 0.64 | 2.50 | 11.3 | 1.25 |

FIG. 2 is a graph showing a relationship between the concentration of a Ni element contained in water used in each of Examples 1 to 6 and Comparative Examples 1 and 2 and the recovered amount of an S element contained in collected filtrate of each of Examples 1 to 4 determined as a relative value against Comparative Example 1 or that of each of Examples 5 and 6 determined as a relative value against Comparative Example 2.

As can be seen from the results shown in Table 1 and FIG. 2, when the glass-ceramic-based sulfide solid electrolyte is used as a sulfide solid electrolyte, the amount of an S element recovered from the sulfide solid electrolyte can be increased according to the concentration of a Ni element contained in the liquid.

As can be seen from the results shown in Table 2 and FIG. 2, also when the sulfide solid electrolyte having an argyrodite-type crystal phase is used as a sulfide solid electrolyte, the amount of an S element recovered from the sulfide solid electrolyte can be increased according to the concentration of a Ni element contained in the liquid as in the case where the glass-ceramic-based sulfide solid electrolyte is used as a sulfide solid electrolyte.

According to the concentration of a Ni element contained in the liquid, the pH of the liquid increases and the recovered amount of an S element increases. Since the recovered amount of an S element increases According to the concentration of a Ni element contained in the liquid, the amount of hydrogen sulfide generated when the sulfide solid electrolyte is dissolved in the liquid reduces.

## Claims

1. A method for recycling a sulfide solid electrolyte, the method comprising:
immersing the sulfide solid electrolyte in a liquid; and
recovering an S element from the sulfide solid electrolyte into the liquid, wherein
a concentration of a Ni element contained in the liquid is 0.46% by mass or more.

2. The method according to claim 1, wherein, in the immersing, a Ni-containing electrode active material is immersed in the liquid.

3. The method according to claim 1, wherein the sulfide solid electrolyte has an argyrodite-type crystal phase.

4. The method according to claim 1, wherein the sulfide solid electrolyte is a glass-ceramic-based sulfide solid electrolyte.

5. The method according to claim 1, wherein the concentration of the Ni element contained in the liquid is 0.46% by mass or more and 10% by mass or less.

6. The method according to claim 2, wherein the Ni-containing electrode active material is a lithium-transition metal composite oxide represented by a general formula LixNiaCobMcOy, wherein M is Mn or Al, 0.1 ≤ x ≤ 1.5, 0.3 ≤ a ≤ 1.0, 0 ≤ b ≤ 0.4, 0 ≤ c ≤ 0.4, a + b + c = 1.0, and 1.5 ≤ y ≤ 2.1.

7. The method according to claim 2, further comprising, before the immersing, disassembling a battery including the sulfide solid electrolyte and the Ni-containing electrode active material to prepare the sulfide solid electrolyte and the Ni-containing electrode active material.

8. The method according to claim 2, further comprising, after the immersing, stirring the liquid.
